# EUROPEAN PATENT SPECIFICATION

(11) **EP 3 039 876 B1**
(45) Date of publication and mention of the grant of the patent: **31.10.2018**
(21) Application number: 14742347.9
(22) Date of filing: 22.07.2014
(51) Int. Cl.: H04N 21/41, H04N 21/436, H04N 21/458, H04N 21/81

(54) **METHOD AND SYSTEM FOR PROVIDING CICAM APPLICATIONS USING CI+ PROTOCOL**
VERFAHREN UND SYSTEM ZUR BEREITSTELLUNG VON CICAM-ANWENDUNGEN UNTER VERWENDUNG DES CI+ PROTOKOLLS
PROCÉDÉ ET SYSTÈME POUR FOURNIR DES APPLICATIONS CICAM EN UTILISANT LE PROTOCOLE CI+

(30) Priority: 01.10.2013 GB 201317377
(43) Date of publication of application: 06.07.2016
(73) Proprietor: Sony Corporation, Tokyo 108-0075 (JP); Sony Europe Limited, Brooklands Weybridge KT13 0XW (GB)
(72) Inventor: HILL-JOWETT, David, Basignstoke Hampshire RG24 8LZ (GB)
(74) Representative: D Young & Co LLP
(86) International application number: PCT/GB2014/052234
(87) International publication number: WO 2015/049484

(56) References cited:
- US-A1- 2002 164 155
- DVB ORGANIZATION: "cm1404.CM-CI-plus0127.Text for Application Priority discussed in 12th CM-CI-plus meetingdocx.doc", DVB, DIGITAL VIDEO BROADCASTING, C/O EBU - 17A ANCIENNE ROUTE - CH-1218 GRAND SACONNEX, GENEVA - SWITZERLAND, 11 June 2013 (2013-06-11), XP017840404,
- DVB ORGANIZATION: "Application priority-v20.pdf", DVB, DIGITAL VIDEO BROADCASTING, C/O EBU - 17A ANCIENNE ROUTE - CH-1218 GRAND SACONNEX, GENEVA - SWITZERLAND, 12 April 2013 (2013-04-12), XP017840441,

## Description

### BACKGROUND

### Field of the Disclosure

The present invention relates to a host device, method and system.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

The Digital Video Broadcast Common Interface Plus (CI+) specification allows a CI+ Conditional Access Module (CICAM) to launch a CICAM application on a host (such as a television or the like). However, the host may be already running its own host application at the time of the CICAM wishing to launch the CICAM application. This can cause a conflict.

For example, the host may be running an application allowing the user to purchase a movie. During the operation of this application, the CICAM may run an application to start a scheduled unattended recording of a different program that requires a personal identification number (PIN) to be input. For example, the scheduled recording may be of a television program having adult themes and so verification of an adult is required.

In this situation, the host has a conflict. Typically, the host will enable the CICAM to run its application. This means that the host will cease running the host application. In other words, the application allowing the user to purchase a movie will stop running. This is inconvenient for the user.

It is an aim of embodiments of the disclosure to address this problem.

DVB Organization: "cm1404.CM-CI-plus0127.Text for Application Priority discussed in 12th CM-CI-plus meetingdocx.doc", DVDB, Digitial Video Broadcasting, C/O EBU- 17A Ancienne Route - CH-1218 Grand Saconnex, Geneva - Switzerland, 11 June 2013 (2013-06-11) describes prior art. US 2002/0614155A describes prior art where two video streams cannot use the same display.

### SUMMARY

According to a first aspect of the disclosure, there is provided a method of controlling a host device, comprising: receiving a request to run a conditional access application on the host device requiring a message to be displayed to a user; checking whether the host device is capable of servicing the request to run the conditional access application; and in the event that the host device is not capable of servicing the request to run the conditional access application, providing the conditional access application to a second, different, device to run thereon.

The host device may not capable of servicing the request because the host device is, at the time of the request, running a host application.

The providing step may further comprise: accessing a local area network; establishing the presence of at least one second device located on the local area network; and providing the conditional access application to one of said second devices located on the local area network to run thereon.

The establishing step may comprise: broadcasting an availability request over the local area network to establish the presence of the at least one second device; and in response to the availability request, receiving an address on the network of the at least one second device.

The provision of the conditional access application may be performed in accordance with a predetermined priority of available second devices on the local area network.

According to a second aspect of the disclosure, there is provided a host device, comprising: receiving circuitry for receiving a request to run a conditional access application on the host device requiring a message to be displayed to a user; control circuitry for checking whether the host device is capable of servicing the request to run the conditional access application; and in the event that the host device is not capable of servicing the request to run the conditional access application, the control circuitry controls communication circuitry to provide the conditional access application to a second, different, device to run thereon.

The host device may not be capable of servicing the request because the host device is, at the time of the request, running a host application.

The control circuitry may be configured to: access a local area network using the communication circuitry; establish the presence of at least one second device located on the local area network; and provide, using the communication circuitry, the conditional access application to one of said second devices located on the local area network to run thereon.

The control circuitry may be configured to: broadcast, using the communication circuitry, an availability request over the local area network to establish the presence of the at least one second device; and in response to the availability request, receive, via the communication circuitry, an address on the network of the at least one second device.

The provision of the conditional access application may be performed in accordance with a predetermined priority of available second devices on the local area network.

A system comprising a host device according to the above connected to a second screen device to run the conditional access application thereon is provided.

A computer program comprising computer readable instructions which, when loaded onto a computer, configure the computer to perform a method according to the above is provided.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows a schematic diagram of a host device with a CAM and a smart card;
Figure 2 shows a schematic diagram of a conditional access (CA) system incorporating the host device of Figure 1;
Figure 3 shows a schematic diagram illustrating the operation of the system of Figure 2;
Figure 4A shows a host running a host application allowing a user to download a movie;
Figure 4B shows a block diagram of a host according to Figure 4A;
Figure 5 shows a host and second screen running a CICAM application according to embodiments of the disclosure; and
Figure 6 shows a flow chart according to embodiments of the disclosure.

### DESCRIPTION OF THE EMBODIMENTS

Referring now to the drawings, wherein like reference numerals designate identical or corresponding parts throughout the several views.

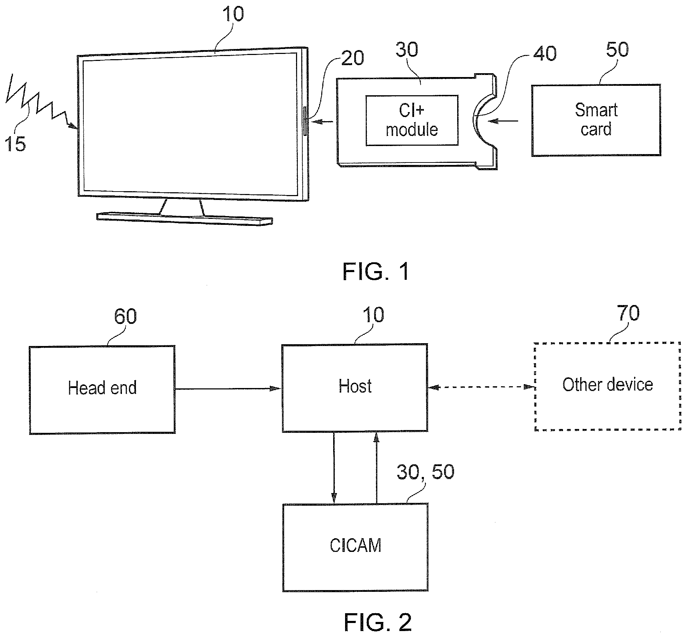

Referring now to Figure 1, a host device 10 is shown here as a television set but could be, for example, a set top box (noting that the expression "set top" does not imply, to the skilled person, any requirement for a particular physical position of the device in use). The host device 10 receives an access-controlled television signal 15 via a broadcast data path. This could be, for example, a satellite television signal received by a satellite dish (not shown), a terrestrial television signal, a cable television signal or the like, although other types of television signal will be discussed below. The host device 10 has a PCMCIA slot 20 which includes electrical connections and a physical space for a plug-in module, both according to the PCMCIA standard. Of course, the host device 10 may receive the access-controlled television signal via other methods such as over Internet Protocol packets (IP), or the like

A CI + conditional access module, referred to as a CICAM 30, is a PCMCIA module which can be plugged into the PCMCIA slot 20. When the CICAM 30 is fully plugged into the slot 20, electrical connections are made between connectors on the CICAM 30 and cooperating connectors within the slot 20. Note that although the embodiments are described with respect to a CI + CAM, other types of removable CAM are applicable to the present techniques. Further, it is noted that other form-factors are envisaged such as Universal Serial Bus or the like.

The CICAM itself may be a cardless module or may have a slot 40 into which a so-called smart card 50 may be inserted. The smart card is removable and carries information defining a current user of the content receiver in a tamper-proof, secure and non-volatile form. When the smart card is fully inserted in the slot 40, a data connection is formed between the smart card 50 and the CICAM 30, either by using cooperating electrical connectors on the smart card 50 and within the slot 40, or by using a known contactless connection technique in which data is transferred wirelessly over a very short range.

Figure 2 schematically illustrates the host device 10 in the context of a conditional access system. A so-called head end 60 represents the source of the access-controlled television signal 15. The head end may represent, for example, an uplink station of a satellite broadcaster or a signal distribution centre of a terrestrial or cable broadcaster. The CA system scrambles content at the head end using a CA system encryption. The head end can also introduce other CA-related information into the encrypted data stream which enables the CICAM to descramble the content and to manage the subscriber's (user's) access and entitlements.

The head end 60 sends the television signal 15 to the host 10 which in turn passes the signal to the CICAM 30 for decryption of the access control encryption. Located within the television signal 15 is one or more broadcast applications. Broadcast application is a term of art and provides additional services from the broadcaster. This may include a pay-TV purchasing application or additional content related to the content currently being displayed. The CICAM 30 then re-encrypts the signal using a local encryption and sends the re-encrypted signal back to the host 10 via the PCMCIA connection. The host decrypts the signal received from the CICAM 30 for display on a display screen or for supply to another device 70 such as a hard disc based video recorder.

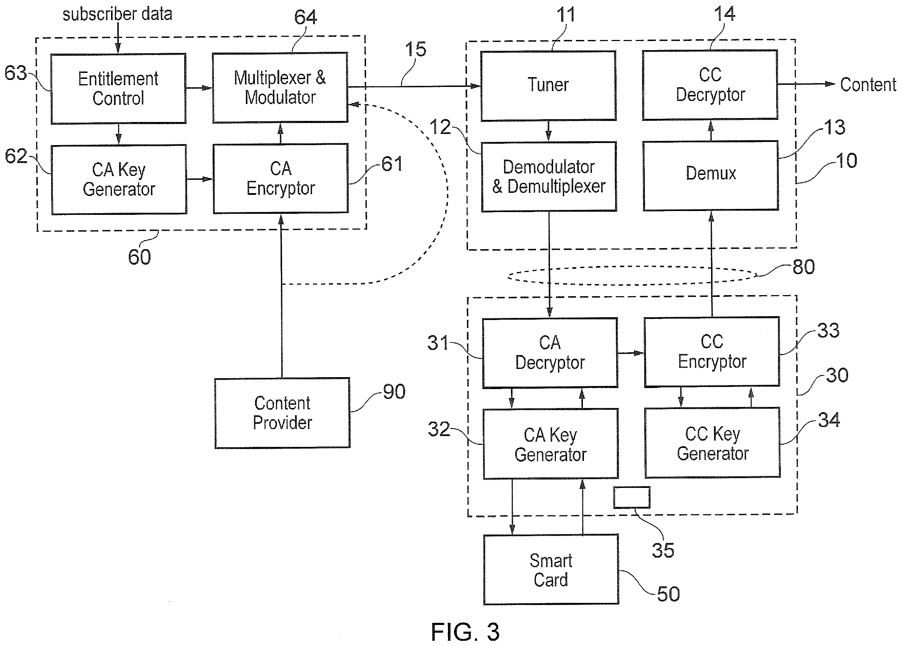

Figure 3 is a schematic diagram illustrating the operation of the system of Figure 2. The detailed operation of the system of Figure 3 is described in the CI Plus Specification 1.3.1 (201 1-10), available (at the time of filing) at http://www.ci-plus.com/data/ci-plus_specification_v1.3.1.pdf. This document is incorporated by reference into the present description. The present description of Figure 3 simply provides an overview of that detailed operation, for the purposes of placing the subsequent description into the appropriate technical context.

As before, Figure 3 shows the head end 60 (which receives a content signal from a content provider 90), the host device 10, the CICAM 30 and the smart card 50. The signal 15 is shown passing from the head end 60 to the host device 10. The secure interface 80 between the host device 10 and the CICAM 30 is referred to as the common interface.

### Conditional Access

Known CA systems provide techniques by which a user can be denied or allowed access to a digital television stream. Access is provided only to those subscribers or users with valid payment accounts. In practical terms, a user is provided with a smart card 50 identifying that user in (ideally) a tamper-free way, and the system is set up so that only users with valid smart cards are able to obtain access to the access-controlled content.

Access control is provided by the use of scrambling and encryption. The content signal is scrambled with an 8-byte control word, which is changed frequently (up to several times per minute) to avoid the CA system being compromised by outside knowledge of the control word. The control words are transmitted to the receiver's CICAM, for descrambling of the scrambled content, in an encrypted form as an entitlement control message (ECM). The CICAM decrypts the control word to allow descrambling of the access-controlled content only when it is authorised to do so by receipt of an entitlement management message (EMM). EMMs are specific to each user or group of users; the CICAM confirms the rights which an EMM provides by comparing the user identification provided in the EMM with user information provided in the smart card 50. The EMMs can be sent less frequently than the ECMs, with intervals between successive EMMs in current commercial systems varying between 12 minutes and six weeks.

ECMs and EMMs themselves are well known message types in MPEG television distribution systems. The format of their payloads can be specific to the CA system in use, with the differences between formats often being semantic rather than having technical significance.

### Head End

The head end 60 comprises a CA encryptor 61, a key generator 62, an entitlement control unit 63 and a multiplexer and modulator 64.

The content provider 90 supplies content (such as television signals) to the head end 60. The head end 60 applies conditional access (CA) scrambling and encryption to the content. Although CA is noted here, the skilled person will appreciate any digital rights management (DRM) is also applicable. More specifically, the CA encryptor 61 scrambles the content using a CA key as a control word. The CA key is generated by the CA key generator 62. The scrambled content generated by the CA encryptor is supplied to the multiplexer and modulator 64.

The CA key is also provided to the entitlement control unit 63, which generates ECMs based on the CA keys and EMMs based on subscriber data defining which subscribers are entitled to descramble which content streams. The ECMs and EMMs are supplied to the multiplexer and modulator 64. One or more scrambled content streams from the CA encryptor 61, one or more unscrambled (open access or "free to air") content streams and the entitlement control messages are multiplexed together to form a transport stream such as an MPEG2 transport stream. Known formats are used to carry the content data, the ECMs and the EMMs. The ECMs, EMMs and data defining the type of scrambling used on each elementary stream (corresponding to individual scrambled content streams) are provided in a known format in a conditional access table (CAT) which has a predetermined program identifier (PID) of 0x001, so that the CAT can be recognised at the CICAM.

The multiplexed transport stream is then modulated by the multiplexer and modulator 64 for transmission as a cable, satellite or terrestrial broadcast signal 15.

### Host Device

The host device 10 comprises a tuner 11, a demodulator and demultiplexer 12, a demultiplexer ("demux") 13 and a CC (content control) decryptor 14. Note that the host device may have other additional functions, such as network (IPTV) television reception.

Depending on the type of broadcast signal 15, the tuner acts to transform the received signal back to baseband, so that the demodulator and demultiplexer 12 can select and demultiplex a single elementary content stream and associated CAT data from the received signal. The content stream and ECM / EMM data are passed via the common interface 80 to the CICAM 30.

In the case of access-controlled content data, at this stage the content data is still scrambled as it is passed via the common interface 80 to the CICAM 30. This part of the transmission over the common interface 80 is therefore secure by virtue of the CA encryption.

Assuming the ECM and EMM allow it, the CICAM 30 descrambles the content data and re-encrypts it using a content control (CC) encryption. The way in which this is done will be described below. The CC encrypted data is returned to the host device 10 where it is demultiplexed by the demux 13 and decrypted by the CC decryptor 14, so that it can be displayed or passed to another device 70 as clear content.

### CICAM

The CICAM 30 comprises a CA decryptor 31, a CA key generator 32, a CC encryptor 33 and a CC key generator 34. The CICAM 30 also comprises a memory 35. Within the memory 35 are stored files which may be retrieved by the broadcast application received from the head end 60. These files consist of the module application. The location of each file within the memory 35 is provided by a Unique Resource Identifier (URI). The detailed association of the file with the URI will be explained later.

The CA decryptor 31 and the CA key generator 32 may be considered as an access control unit for decoding access-controlled broadcast content or other data. The CC key generator 34 and the CC encryptor 33 of the CICAM 30, and the demultiplexer 13 and the CC decryptor 14 of the host device 10 cooperate to provide an encrypted communication link (the common interface 80) for decoded access-controlled encoded broadcast content, between the CICAM and the host device.

The CA decryptor 31 uses keys generated from received ECMs and EMMs by the CA key generator 32, using checks of the user's identity from the smart card 50, to descramble the received access-controlled content. This part of the operation of the CICAM uses known CA techniques to retrieve and apply the CA keys.

Clear content data is passed from the CA decryptor 31 to the CC encryptor 33. However, as this data transfer is entirely internal to the CICAM, it can be rendered secure and tamper proof by known techniques such as by providing the CA decryptor 31, the CC encryptor 33 and the clear content interface within a single integrated circuit device.

The CC encryptor 33 encrypts the descrambled content using a CC key supplied by the CC key generator 34. This key is established by a secure interchange between the CICAM 30 and the host device 10, and is specific to that CICAM-host device pair. The CC-encrypted content is passed over the common interface 80 to the host device 10. Therefore, this part of the common interface is also secure, as the content data is CC-encrypted as it passes to the host device.

### Key Exchange

The CICAM 30 and the host device 10 both contain logic, firmware or software providing algorithms for Diffie-Hellman (DH) secure key exchange, hashing and encryption using the known algorithms SHA-256, DES and AES, respective certificates issued by a certifying authority such as CI Plus LLP, and private keys with the corresponding public keys.

When the CICAM 30 is first associated with the host device 10, the CICAM 30 initiates an authentication process with the host device 10. In this process, each device verifies the other's certificate, and the DH key exchange process takes place so as to securely share keys between the two devices. In particular, the CICAM first requests that the host device provides its certificate data. The CICAM verifies the signature on the host device's certificate. The same process is then carried out by the host requesting and verifying the CICAM's certificate. The CICAM and the host then each demonstrate that they possess the private key corresponding to the public key in the certificate by signing a DH public key and sending it to the other device for validation. The CICAM then obtains and verifies an authentication key AKH from the host. The CICAM and host start to compute and exchange key data for the encryption and authentication of data sent over the common interface 80. In this way, the key, key pair or other key information established by the CICAM and the host for communication over the common interface 80 is specific to that CICAM-host pair.

After authentication, the CICAM also starts to compute the CC key. The CICAM can also instruct the host device to compute the CC key. The CC key is then used as described above to encrypt content data passed from the CICAM 30 to the host device 10, according to the AES algorithm. Therefore, it will be understood that the keys used for the secure common interface 80 are specific to a particular CICAM-host pair.

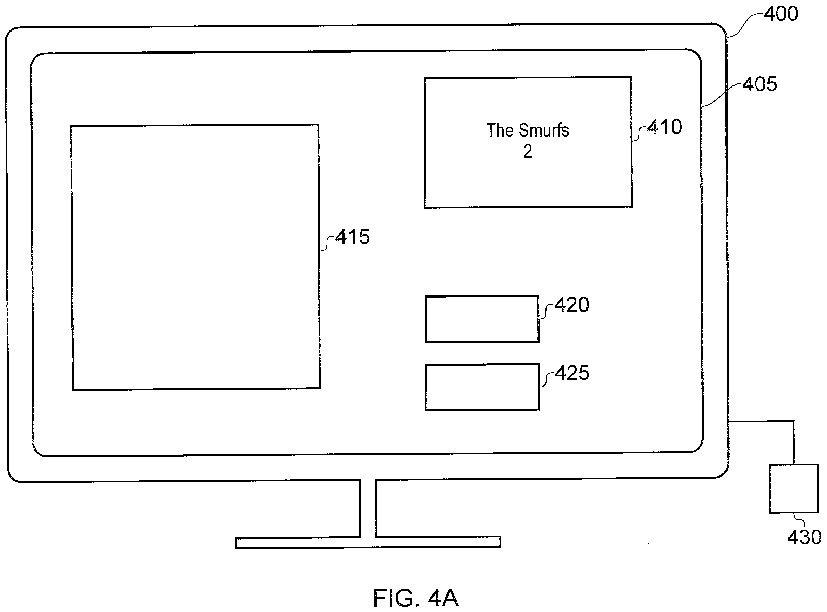

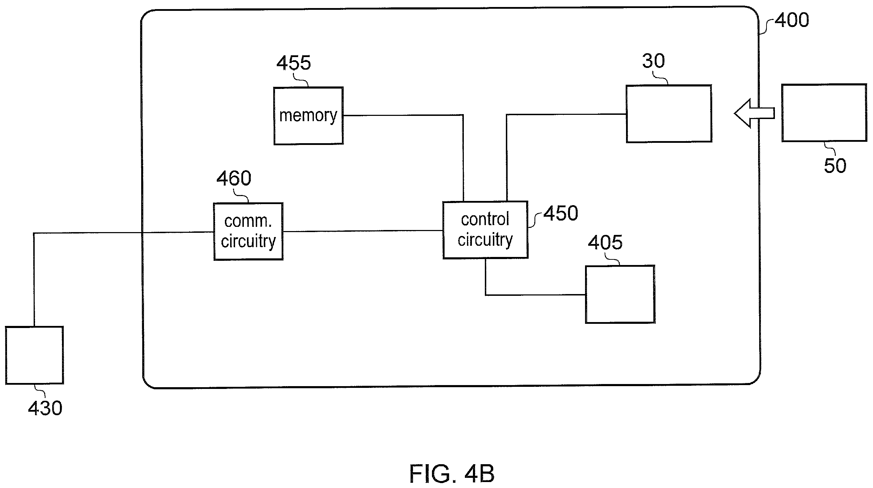

During operation of the host device 10, a host application may be started. In Figure 4, a host (embodied as a television 400) is running a host application allowing the user to download a movie. In particular, the user operates a remote commander (not shown) to access the on-demand features of the television 400. The television 400 accesses the Internet via router 430. The television 400 is connected to the router 430 in a wired manner. However, the disclosure is not so limited and the television 400 may be connected to the router 430 in a wireless manner using WiFi or the like.

The internet provides a list of content which the user may access and displays this to the user. In the example of Figure 4, the host displays, on the television screen 405, a trailer of the movie in area 410. The movie, in this case, is designed for children and is called "The Smurfs 2". A synopsis is provided in area 415 to enable the user to decide whether to purchase the movie. If the user wishes to purchase the movie, they highlight and select box 420 using the remote commander. However, if the user wishes to return to the previous screen, the user highlights and selects box 425 using the remote commander.

Referring to Figure 4B, the television 400 is controlled by control circuitry 450, which is typically a microprocessor. The control circuitry 450 is connected to memory 455 which is, in embodiments, solid state memory used to store a computer program. The computer program contains software which has computer readable instructions which, when read by the control circuitry 450, performs certain functions enabling the television 400 to operate. The control circuitry 450 is also connected to communication circuitry 460. The communication circuitry 460 is connected to router 430 either using a wired connection such as Ethernet, or wirelessly using a wireless standard such as WiFi. The router 430 connects to other devices in a local area network.

The control circuitry 450 is also connected to the screen 405 and controls the content displayed to the user. Finally, the control circuitry 450 is connected to the CICAM module 30 into which the smart card 50 is located. In the following, the CICAM module is sometimes referred to as receiving circuitry.

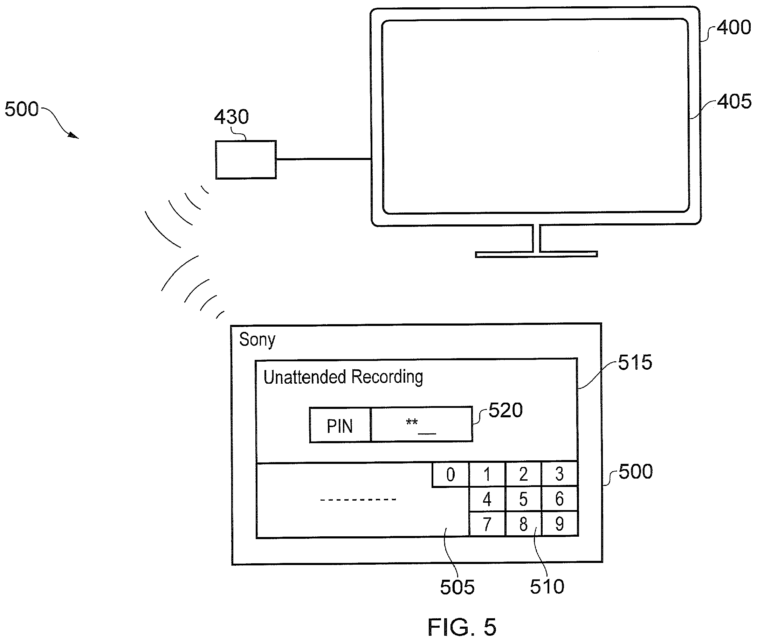

Figure 5 shows an embodiment 500 of the present disclosure. If during the purchase process of Figure 4 (i.e. during running the host application), the CICAM runs a CICAM application, the host application is still displayed on the screen 405 and the CICAM application is provided on a second screen 515. In the embodiment of Figure 5, the CICAM application is an unattended recording application (that is a recording scheduled using an electronic program guide or the like) requiring a user PIN to commence recording as the content of the program to be recorded contains an adult theme. For example, a horror movie is to be recorded. The PIN is required in this case as this allows the content to be stored in a descrambled manner.

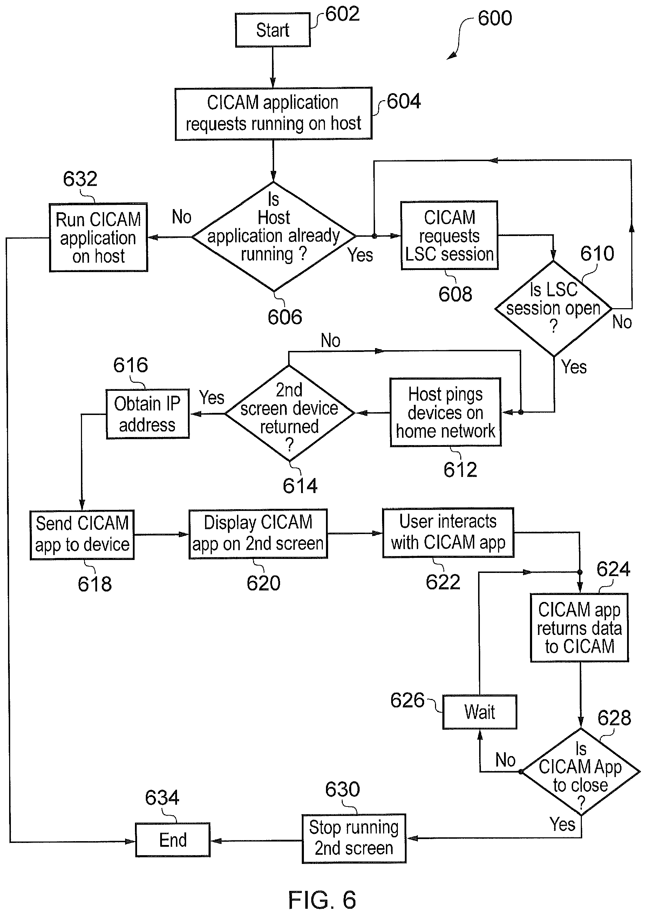

As will be explained with reference to Figure 6, when required to run, the CICAM requests that the CICAM application is presented to the user via the host (in this case, the television 400). As the television 400 cannot comply with this request because the television 400 is running a host application (i.e. the movie purchasing application), the CICAM requests that the television 400 open a Low Speed Communication (LSC) session over an IP address. In particular, the CICAM requests that the television 400 (and specifically the control circuitry 450) "ping" all devices on the home network to establish an available second screen using communication circuitry 460. This is performed through router 430. This "ping" may be referred to as an availability request and is a request to all devices on the network establishing whether a device is available. If the device is available, the device will respond to the ping.

In this case, a tablet 500, which is, in this case a Sony ® Xperia Z ® tablet, responds to the ping identifying itself as having the required second screen. At this stage, the tablet 500 may provide a pop-up confirming whether the user of the tablet 500 wishes to run the CICAM application on the tablet 500. If the user does wish to run the CICAM on the tablet 500, they will confirm this by pressing the relevant button on the pop-up. Alternatively, if the user does not wish to run the CICAM application on the second device, they will press the relevant button on the pop-up. Only after receiving the confirmation of the user will the IP address of the tablet 500 is also provided to the router 430. The television 400 then establishes the Low Speed Communication connection between the CICAM and the tablet 500. The CICAM then runs the CICAM application on the tablet 500.

As is seen in Figure 5, the CICAM application requires a user's PIN to commence unattended recording. Specifically, the CICAM application uses the tablet screen 515 to display a pop-up notification requesting the user's PIN in box 520. The CICAM application opens the tablet's on-screen keyboard 505 which includes a number pad 510. The user then presses the respective key on the keyboard 505 or the number pad 510 to enter the PIN in box 520. Once the PIN has been correctly entered, the PIN is returned to the CICAM via the communication circuitry 460 and the control circuitry 450 and the unattended recording can commence.

In the embodiment of Figure 5, the router 430 and the tablet 500 communicate using 802.11g/n or another WiFi standard. However, the invention is not so limited and the router 430 and the tablet may connect using Digital Living Network Alliance (DLNA) or some other wired or wireless standard. Indeed, the television 400 may directly connect to the tablet 500 without using the router 430. For example, the communication circuitry 460 in the television 400 may already be connected to the tablet 500 using DLNA. In this case, there is no need for the television 400 to ping other devices using IP addresses as the television 400 will directly communicate with the tablet 500 in a point-to-point manner.

In Figure 6, a flow diagram 600 explaining embodiments of the present disclosure is shown. The flow diagram starts at step 602. The CICAM requests that a CICAM application can run on a host (the television 400 in Figure 4 and 5). This is step 604. The host checks whether a host application is already running thereon in step 606. If no host application is being run on the host, the "no" path is followed and the host allows the CICAM application to run on the host. This is step 632. After the CICAM application is completed, the process ends at step 634.

Returning to step 606, if on the other hand a host application is already running on the host, the "yes" path is followed. The CICAM requests that the host opens a low speed communication session. This is step 608. A check is made by the host to confirm that a low speed communication session is opened. This is step 610. If no session has yet been opened, the "no" path is followed. The host then reperforms step 608. If a low speed communication session has been opened, the "yes" path is followed. The host then pings the devices on the home network. This is step 612. The host then checks that a second screen device is returned. This is step 614. If no second screen device is returned, the "no" path is followed and the host pings the devices again in step 612.

If, on the other hand, a second screen device is returned in step 614, the "yes" path is followed. The host obtains the IP address of the second screen device. This is step 616. The CICAM application is then sent, by the CICAM, to the second screen device located at the IP address. This is step 618. The CICAM application is displayed on the second screen. This is step 620. The user interacts with the CICAM application on the second screen device. This is step 622. Any data that is input or provided by the user during the interaction is returned to the CICAM. This is step 624. A check is then made to see if the CICAM application is to close. This check is performed by the CICAM in step 628. If the CICAM application is yet to close, the "no" path is followed to a wait step (step 628) and subsequently returning to step 624. If, on the other hand, the CICAM application should close, the "yes" path from step 628 is followed. The CICAM application is stopped running on the second screen in step 630. The instruction to stop running is provided by the CICAM. The whole process then ends at step 634.

Although the foregoing has been explained with reference to the CICAM application being handled by the CICAM module, the invention is in no way limited to this. For example, after the CICAM requests that the host displays the CICAM application, if the host has a host application running thereon, rather than the CICAM requesting that a LSC session is opened with a second screen device and the CICAM providing the CICAM application to the second screen device, the host may simply accept the request. Rather than then stopping the host application and displaying the CICAM application, the host application will itself open the LSC session and provide the CICAM application to the second screen. This allows the CICAM to be reallocated to other applications while the CICAM application is being displayed on the second screen.

Although the foregoing has been explained with reference to only one second screen device replying to the ping, in reality a plurality of second screen devices may be available for use by the CICAM application. In this case, the second screen may be selected according to a priority order. Specifically, the priority given to difference second screen devices may be allocated during set-up. For example, the user may wish for tablet 500 to be given the highest priority as this will be kept close to the user when connected to the router. Alternatively, if a second television in the parents' bedroom is connected to the network, then there is an assumption that one or both of the parents are watching this second television. Therefore, this may be given the highest priority as the parent may be able to deal with any CICAM application request. Of course, different devices on the network, such as a child's tablet may never be allowed to act as a second screen to avoid any circumvention of parental controls.

Although the foregoing has described the provision of the CICAM application to the second screen device in the situation that the host device is running a host application, the disclosure is not so limited. For example, the host device may simply not be able to be capable of servicing the request as the host device may be running an alternative, and unsupported version of middleware to the CICAM application. Additionally, the host device may not be to support all available middleware. In this case, the second screen device may run the middleware not supported by the host device. Further, if the host device is connected via an HDMI input, the content from the CICAM application may not be desired to be displayed. Therefore, the CICAM application may then be displayed on the second screen.

Obviously, numerous modifications and variations of the present disclosure are possible in light of the above teachings. It is therefore to be understood that within the scope of the appended claims, the invention may be practiced otherwise than as specifically described herein.

In so far as embodiments of the invention have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present invention.

Of course, the second screen may be used to enter purchasing details of content to be recorded by the host device. In other words, the second screen may be used to enter the user's credit card information and then these details will be passed to the host device.

If the host device becomes available again after the second device has started to run the CICAM application, CICAM application may continue running on the second device. Alternatively, the host device may notify the CICAM that it is now able to process the CICAM application. In this case, the conditional access module confirms whether the second screen application is being interacted with. If there is no interaction, then the CICAM application stops the request to the second screen application and re-requests the CICAM application on the Host device. In the case of the host device controlling the use of the second device, then the host would stop the second screen request and launch the CICAM application on its own screen.

Although the foregoing has indicated that a pop-up will be provided to the user, in embodiments, the pop-up may not be provided to the user.

Of course, although the foregoing has been decribed as having the second device on the same network as the host device, the disclosure is not limited to this. The second device may be located on a different network such as on a cellular network or over the internet or the like. In this instance, the host device would store the IP addresses of approved second screen devices.

## Claims

1. A method of controlling a host device (10), comprising:
receiving a request from a CICAM(30) connected to the host device(10), using the CI+ protocol, to run a CICAM application on the host device (10) requiring a message to be displayed to a user;
checking whether the host device (10) is capable of servicing the request to run the CICAM application; and
in the event that the host device (10) is not capable of servicing the request to run the CICAM application,
providing the CICAM application to a second, different, device to run thereon, wherein the providing step further comprises:
accessing a local area network;
establishing the presence of at least one second device located on the local area network; and
providing the CICAM application to one of said second devices located on the local area network over a Low Speed Communication LSC session to run thereon.

2. A method according to claim 1, wherein the host device is not capable of servicing the request because the host device is, at the time of the request, running a host application.

3. A method according to claim 1, wherein the establishing step comprises:
broadcasting an availability request over the local area network to establish the presence of the at least one second device; and
in response to the availability request, receiving an address on the network of the at least one second device.

4. A method according to claim 1, wherein the provision of the CICAM application is performed in accordance with a predetermined priority of available second devices on the local area network.

5. A host device (10), comprising:
receiving circuitry (460) for receiving from a CICAM (30) connected to the host device (10), using the CI+ protocol, a request to run a CICAM application on the host device requiring a message to be displayed to a user;
control circuitry (450) for checking whether the host device is capable of servicing the request to run the CICAM application; and
in the event that the host device is not capable of servicing the request to run the CICAM application,
the control circuitry (450) controls communication circuitry to provide the CICAM application to a second, different, device to run thereon, wherein the control circuitry is further configured to:
access a local area network using the communication circuitry;
establish the presence of at least one second device located on the local area network; and
provide, using the communication circuitry, the CICAM application to one of said second devices located on the local area network over a Low Speed Communication LSC session to run thereon.

6. A host device according to claim 5, wherein the host device is not capable of servicing the request because the host device is, at the time of the request, running a host application.

7. A host device according to claim 5, wherein the control circuitry is configured to:
broadcast, using the communication circuitry, an availability request over the local area network to establish the presence of the at least one second device; and
in response to the availability request, receive, via the communication circuitry, an address on the network of the at least one second device.

8. A host device according to claim 5, wherein the provision of the CICAM application is performed in accordance with a predetermined priority of available second devices on the local area network.

9. A system comprising a host device according to claim 5 connected to a second screen device to run the CICAM application thereon.

10. A computer program comprising computer readable instructions which, when loaded onto a computer, configure the computer to perform a method according to claim 1 thereon.

11. A storage medium configured to store the computer program of claim 10 therein or thereon.

## Patentansprüche

1. Verfahren zum Steuern einer Wirtsvorrichtung (10), umfassend:
Empfangen einer Anforderung von einem mit der Wirtsvorrichtung (10) verbundenen CICAM (30),
Verwenden des Protokolls CI+, um eine CICAM-Anwendung auf der Wirtsvorrichtung (10) auszuführen, die erfordert, dass eine Nachricht einem Benutzer angezeigt wird;
Überprüfen, ob die Wirtsvorrichtung (10) imstande ist, die Anforderung zum Ausführen der CICAM-Anwendung zu bedienen; und
in dem Fall, dass die Wirtsvorrichtung (10) nicht imstande ist, die Anforderung zum Ausführen der CICAM-Anwendung zu bedienen,
Bereitstellen der CICAM-Anwendung einer zweiten, verschiedenen, Vorrichtung, um darauf ausgeführt zu werden, wobei der Schritt des Bereitstellens ferner umfasst:
Zugreifen auf ein Nahbereichsnetzwerk;
Feststellen des Vorhandenseins mindestens einer zweiten Vorrichtung, die in dem Nahbereichsnetzwerk angeordnet ist; und
Bereitstellen der CICAM-Anwendung einer der zweiten Vorrichtungen, die in dem Nahbereichsnetzwerk angeordnet sind, über eine Niedriggeschwindigkeitskommunikation- bzw. LSC-Sitzung, um darauf ausgeführt zu werden.

2. Verfahren nach Anspruch 1, wobei die Wirtsvorrichtung nicht imstande ist, die Anforderung zu bedienen, weil die Wirtsvorrichtung zur Zeit der Anforderung eine Wirtsanwendung ausführt.

3. Verfahren nach Anspruch 1, wobei der Schritt des Feststellens umfasst:
Rundsenden einer Verfügbarkeitsanforderung über das Nahbereichsnetzwerk, um das Vorhandensein der mindestens einen zweiten Vorrichtung festzustellen; und
als Reaktion auf die Verfügbarkeitsanforderung Empfangen einer Adresse in dem Netzwerk der mindestens einen zweiten Vorrichtung.

4. Verfahren nach Anspruch 1, wobei die Bereitstellung der CICAM-Anwendung gemäß einer im Voraus bestimmten Priorität der verfügbaren zweiten Vorrichtungen in dem Nahbereichsnetzwerk durchgeführt wird.

5. Wirtsvorrichtung (10), umfassend:
Empfangsschaltungen (460) zum Empfangen, von einem mit der Wirtsvorrichtung (10) verbundenen CICAM (30) unter Verwendung des Protokolls CI+, einer Anforderung zum Ausführen einer CICAM-Anwendung auf der Wirtsvorrichtung, die erfordert, dass eine Nachricht einem Benutzer angezeigt wird;
Steuerschaltungen (450) zum Überprüfen, ob die Wirtsvorrichtung imstande ist, die Anforderung zum Ausführen der CICAM-Anwendung zu bedienen; und
in dem Fall, dass die Wirtsvorrichtung nicht imstande ist, die Anforderung zum Ausführen der CICAM-Anwendung zu bedienen,
steuern die Steuerschaltungen (450) die Kommunikationsschaltungen zum Bereitstellen der CICAM-Anwendung einer zweiten, verschiedenen, Vorrichtung, um darauf ausgeführt zu werden, wobei die Steuerschaltungen ferner konfiguriert sind zum:
Zugreifen auf ein Nahbereichsnetzwerk unter Verwendung der Kommunikationsschaltungen;
Feststellen des Vorhandenseins mindestens einer zweiten Vorrichtung, die in dem Nahbereichsnetzwerk angeordnet ist; und
Bereitstellen, unter Verwendung der Kommunikationsschaltungen, der CICAM-Anwendung einer der zweiten Vorrichtungen, die in dem Nahbereichsnetzwerk angeordnet sind, über eine Niedriggeschwindigkeitskommunikation- bzw. LSC-Sitzung, um darauf ausgeführt zu werden.

6. Wirtsvorrichtung nach Anspruch 5, wobei die Wirtsvorrichtung nicht imstande ist, die Anforderung zu bedienen, weil die Wirtsvorrichtung zur Zeit der Anforderung eine Wirtsanwendung ausführt.

7. Wirtsvorrichtung nach Anspruch 5, wobei die Steuerschaltungen konfiguriert sind zum:
Rundsenden, unter Verwendung der Kommunikationsschaltungen, einer Verfügbarkeitsanforderung über das Nahbereichsnetzwerk, um das Vorhandensein der mindestens einen zweiten Vorrichtung festzustellen; und
als Reaktion auf die Verfügbarkeitsanforderung Empfangen, über die Kommunikationsschaltungen, einer Adresse in dem Netzwerk der mindestens einen zweiten Vorrichtung.

8. Wirtsvorrichtung nach Anspruch 5, wobei die Bereitstellung der CICAM-Anwendung gemäß einer im Voraus bestimmten Priorität der verfügbaren zweiten Vorrichtungen in dem Nahbereichsnetzwerk durchgeführt wird.

9. System, umfassend eine Wirtsvorrichtung nach Anspruch 5, verbunden mit einer zweiten Bildschirmvorrichtung zum Ausführen der CICAM-Anwendung darauf.

10. Computerprogramm, umfassend computerlesbare Anweisungen, die, wenn sie in einen Computer geladen werden, den Computer konfigurieren, ein Verfahren nach Anspruch 1 darauf durchzuführen.

11. Speichermedium, konfiguriert zum Speichern des Computerprogramms nach Anspruch 10 darin oder darauf.

## Revendications

1. Procédé de commande d'un dispositif hôte (10), comprenant :
la réception d'une requête provenant d'un module d'accès conditionnel à interface commune, CICAM (30) connectée au dispositif hôte (10), à l'aide du protocole CI+, pour exécuter une application CICAM sur le dispositif hôte (10) requérant qu'un message soit affiché à un utilisateur ;
la vérification si le dispositif hôte (10) est capable de traiter la requête d'exécution de l'application CICAM ; et
dans le cas où le dispositif hôte (10) n'est pas capable de traiter la requête d'exécution de l'application CICAM,
la fourniture de l'application CICAM à un second dispositif différent pour l'exécuter sur celui-ci, l'étape de fourniture comprenant en outre :
l'accès à un réseau local ;
l'établissement de la présence d'au moins un second dispositif situé sur le réseau local ; et
la fourniture de l'application CICAM à l'un desdits seconds dispositifs situés sur le réseau local au cours d'une session de communication à faible vitesse, LSC, pour être exécutée sur celui-ci.

2. Procédé selon la revendication 1, le dispositif hôte n'étant pas capable de traiter la requête parce que le dispositif hôte étant, au moment de la requête, en cours d'exécution d'une application hôte.

3. Procédé selon la revendication 1, l'étape d'établissement comprenant :
la diffusion d'une requête de disponibilité sur le réseau local pour établir la présence du ou des seconds dispositifs ; et
en réponse à la requête de disponibilité, la réception d'une adresse sur le réseau du ou des seconds dispositifs.

4. Procédé selon la revendication 1, la fourniture de l'application CICAM étant réalisée conformément à une priorité prédéterminée de seconds dispositifs disponibles sur le réseau local.

5. Dispositif hôte (10), comprenant :
un circuit de réception (460) pour recevoir à partir d'un CICAM (30) connecté au dispositif hôte (10), à l'aide du protocole CI+, une requête d'exécution d'une application CICAM sur le dispositif hôte requérant qu'un message soit affiché à un utilisateur ;
un circuit de commande (450) pour vérifier si le dispositif hôte est capable de traiter la requête d'exécution de l'application CICAM ; et
dans le cas où le dispositif hôte n'est pas capable de traiter la requête d'exécution de l'application CICAM, le circuit de commande (450) commande un circuit de communication pour fournir l'application CICAM à un second dispositif, différent, pour l'exécuter sur celui-ci, le circuit de commande étant en outre configuré pour :
accéder à un réseau local à l'aide du circuit de communication ;
établir la présence d'au moins un second dispositif situé sur le réseau local ; et
fournir, à l'aide du circuit de communication, l'application CICAM à l'un desdits seconds dispositifs situés sur le réseau local au cours d'une session de communication à faible vitesse, LSC, pour être exécutée sur celui-ci.

6. Dispositif hôte selon la revendication 5, le dispositif hôte n'étant pas capable de traiter la requête parce que le dispositif hôte est, au moment de la requête, en cours d'exécution d'une application hôte.

7. Dispositif hôte selon la revendication 5, le circuit de commande étant configuré pour :
diffuser, à l'aide du circuit de communication, une requête de disponibilité sur le réseau local pour établir la présence du ou des seconds dispositifs ; et
en réponse à la requête de disponibilité, recevoir, par l'intermédiaire du circuit de communication, une adresse sur le réseau, du ou des seconds dispositifs.

8. Dispositif hôte selon la revendication 5, la fourniture de l'application CICAM étant réalisée conformément à une priorité prédéterminée de seconds dispositifs disponibles sur le réseau local.

9. Système comprenant un dispositif hôte selon la revendication 5, connecté à un second dispositif d'écran pour exécuter l'application CICAM sur celui-ci.

10. Programme informatique comprenant des instructions lisibles par ordinateur qui, lorsqu'elles sont chargées sur un ordinateur, configurent l'ordinateur pour réaliser un procédé selon la revendication 1 sur celui-ci.

11. Support de stockage configuré pour stocker le programme d'ordinateur selon la revendication 10 à l'intérieur ou sur celui-ci.
